# EUROPEAN PATENT APPLICATION

(11) **EP 2 043 335 A1**
(43) Date of publication of application: **01.04.2009**
(21) Application number: 08252917.3
(22) Date of filing: 02.09.2008
(51) Int. Cl.: H04M 1/23, H04M 1/02

(54) **Sliding handheld electronic device including a flexible circuit board**

(30) Priority: 29.09.2007 TW 96136566
(71) Applicant: ASUSTeK Computer Inc., Peitou,Taipei (TW)
(72) Inventor: Lai, Chin-Chung, Taipei (TW); Hsu, Ming-Fang, Taipei (TW)
(74) Representative: Johnson, Terence Leslie

(57) **Abstract**

As described, a handheld electronic device (100) includes a main body (110), a bottom cover (120), a circuit board (130) and a key pad or membrane (140). The main body (110) has a first side (110a) and a second side (110b), and the second side (110b) is opposite to the first side. The first side (110a) has a display screen (112), and the second side has a holding space (114). The bottom cover (120) is slidingly provided at the main body to cover the holding space (114). The key membrane (140) is provided at one surface of the bottom cover (120), and the surface faces the main body (110). The circuit board (130) electrically connects the key membrane (140) with the main body (110). The key membrane (140) is provided on the circuit board (130), and the bottom cover (120) is suitable to slide along a path of movement L to allow the key membrane (140) to be exposed outside the main body (110).

## Description

### BACKGROUND OF THE INVENTION

### Field of the Invention

The invention relates to a handheld electronic device and, more particularly, to a handheld electronic device having a sliding type key membrane.

### Description of the Related Art

Together with the progress of the science and technology, electronic products are essential in daily life, and human-based and functional electronic products continuously weed through the old to bring forth the new. For example, to meet a requirement of people for handheld electronic devices, the handheld electronic devices on the market have various functions such as a journey management function, a memorandum function or a game function in addition to a basic communication function. The above handheld electronic devices may be, for example, cell phones, personal digital assistants, palmtops, and so on.

Taking cell phones as an example, cell phones are mostly classified as a bar type of cell phone, a sliding type of cell phone and a folding type of cell phone. In the bar type of cell phone, a display screen and a key module are provided at the same side of the main body, while the sliding type of cell phone or the folding type of cell phone usually includes an upper body provided with the display screen and a lower body provided with the key module. Since the display screen and the key module of the bar type of cell phone are provided at the same side of the main body, the main body needs great installation space and is not easy to satisfy the requirement of lightness and slimness for handheld electronic devices. Since the sliding type of cell phone or the folding type of cell phone consists of the upper body provided with the display screen and the lower body provided with the key module, the whole thickness the sliding type of cell phone or the folding type of cell phone is great and does not satisfy the requirement of lightness and slimness for the handheld electronic devices either.

### BRIEF SUMMARY OF THE INVENTION

The invention seeks to provide a handheld electronic device in which space for providing electronic elements is saved, and the handheld electronic device accords with the lightness and slimness design tendency.

According to the invention, there is provided a handheld electronic device comprising: a main body having a first side and a second side opposite to the first side, wherein the first side has a display screen, and the second side has a holding space; a bottom cover slidingly provided at the main body and suitable to cover the holding space; a key membrane provided at a surface of the bottom cover, wherein the surface faces the main body; and a circuit board electrically connected to the key membrane and the main body; wherein the bottom cover is suitable to slide along a path of movement to allow the key membrane to be exposed outside the main body.
The invention thus provides a handheld electronic device including a main body, a bottom cover, a circuit board and a key membrane. The main body has a first side and a second side opposite to the first side. The first side has a display screen, and the second side has a holding space. The bottom cover is slidingly provided at the main body and is suitable to cover the holding space. The key membrane is provided at a surface of the bottom cover, and the surface faces the main body. A circuit board electrically connects the key membrane with the main body. The bottom cover is suitable to slide along a moving path to allow the key membrane to be exposed outside the main body.

In one embodiment of the invention, the circuit board may be a flexible circuit board.

In one embodiment of the invention, the flexible circuit board may have a first end and a second end. The first end is provided at the surface of the bottom cover, and the surface faces the main body. The second end is electrically connected to the main body. Part of the flexible circuit board between the first end and the second end may be located at the holding space.

In one embodiment of the invention, the handheld electronic device may further include a ribbon cable provided at the holding space and electrically connected between the circuit board and the main body.

In one embodiment of the invention, the main body may further have a connecting portion, and the circuit board is electrically connected to the connecting portion.

In one embodiment of the invention, the circuit board may have a touch-sensitive area, and the key membrane is provided on the touch-sensitive area.

In one embodiment of the invention, the above bottom cover may be a battery cover, and the holding space is suitable to hold a battery.

In one embodiment of the invention, the key membrane is a metal key membrane.

In the invention, a circuit board is provided on the bottom cover of the handheld electronic device and is electrically connected to the main body, and a key membrane is disposed on the circuit board. The mode of providing the key membrane on the bottom cover can effectively decrease the whole thickness of the handheld electronic device, which accords with the lightness and slimness design tendency.

These and other features, aspects, and advantages of the present invention will become better understood with regard to the following description, appended claims, and accompanying drawings.

### BRIEF DESCRIPTION OF THE SEVERAL VIEWS OF THE DRAWINGS

FIG. 1A is a schematic diagram showing a handheld electronic device according to one embodiment of the invention;

FIG. 1B is a cross-sectional view showing the handheld electronic device in FIG. 1A along a line I-I';

FIG. 2A is a schematic diagram showing that the bottom cover in FIG. 1A slides along a moving path;

FIG. 2B is a cross-sectional view showing the handheld electronic device in FIG. 2A along a line II-II';

FIG. 3A is a cross-sectional view showing a handheld electronic device according to another embodiment of the invention; and

FIG. 3B is cross-sectional view showing that the bottom cover in FIG. 3A slides along a moving path.

### DETAILED DESCRIPTION OF THE EMBODIMENTS

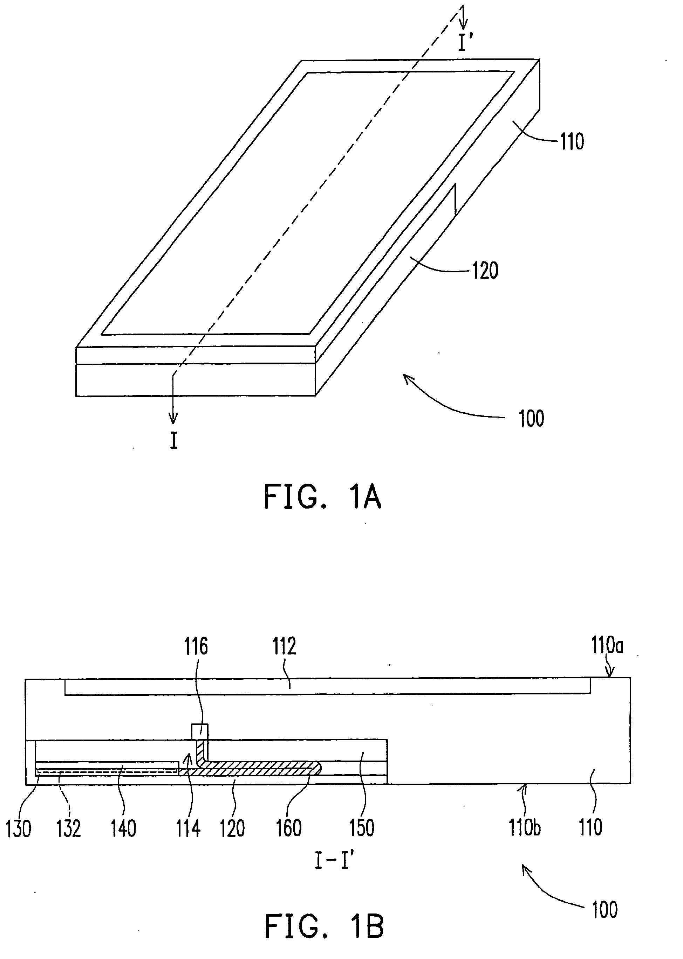

FIG. 1A is a schematic diagram showing a handheld electronic device according to one embodiment of the invention, and FIG. 1B is a cross-sectional view showing the handheld electronic device in FIG. 1A along a line I-I'. As shown in FIG. 1A and FIG. 1B, a handheld electronic device 100 of the embodiment mostly includes a main body 110, a bottom cover 120 such as a battery cover, a circuit board 130 and a key membrane 140 provided on the circuit board 130. The main body 110 has a first side 110a and a second side 110b opposite to the first side 110a. The first side 110a has a display screen 112, and the second side 110b has a holding space 114 for holding a battery 150.

In the embodiment, a slide rail (not shown) may be disposed on part of the main body 110 near the holding space 114. The bottom cover 120 can be slidingly provided on the main body 110 and is suitable to cover the holding space 114. The holding space 114 can also be provided with other electronic elements. The bottom cover 120 slidingly provided at the main body 110 can protect the electronic elements provided in the holding space 114 from being damaged by external force.

To make the handheld electronic device 100 have characteristics of slightness and slimness, the circuit board 130 electrically connected to the main body 110 is provided at one surface of the bottom cover 120, and the surface faces the main body 110. For example, a key membrane 140 is disposed on a touch-sensitive area 132 of the circuit board 130, and the key membrane 140 may be a metal key membrane. The bottom cover 120 may be a thin case of the handheld electronic device 100. Therefore, the design of providing the circuit board 130 and the key membrane 140 at the bottom cover 120 in the embodiment allows the handheld electronic device 100 to be light and slim. The key membrane 140 of the embodiment has a small thickness, and the circuit board 130 is a thin circuit board. Therefore, the handheld electronic device 100 of the embodiment further accords with the lightness and slimness tendency or requirements.

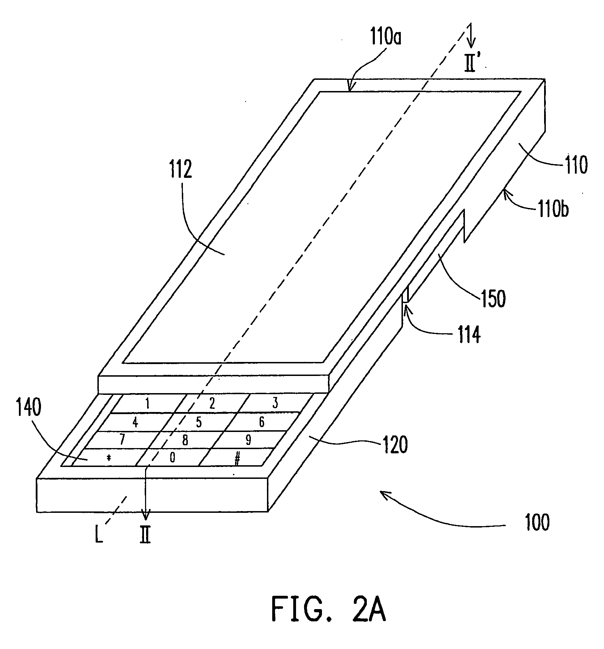

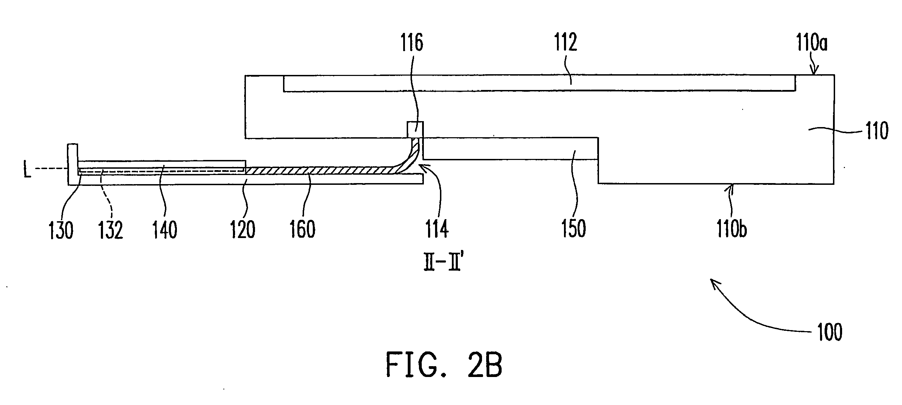

FIG. 2A is a schematic diagram showing that the bottom cover in FIG. 1A slides along a moving path, and FIG. 2B is a cross-sectional view showing the handheld electronic device in FIG. 2A along a line II-II'. As shown in FIG. 2A and FIG. 2B, when a user wants to operate the handheld electronic device 100, the user can slide the bottom cover 120 along a moving path L via the sliding rail to allow the key membrane 140 in the bottom cover 120 to be exposed outside the main body 110. Then, the user can operate the handheld electronic device 100 by pressing the key membrane 140. The key membrane 140 of the embodiment has a plurality of keys correspondingly provided at the touch-sensitive area 132 on the circuit board 130. After the user inputs an operation command by pressing the keys, the circuit board 130 electrically connected to the main body 110 can transfer the command inputted by the user to the main body 110.

In the embodiment, a connecting portion 116 is disposed at the second side 110b of the main body 110. The handheld electronic device 100 further includes a ribbon cable 160 provided at the holding space 114 and electrically connected between the circuit board 130 and the connecting portion 116 of the main body 110. In this way, the operation command inputted by the user can be transferred to the main body 110 via the ribbon cable 160 to drive the handheld electronic device 100 to execute working commands.

The ribbon cable 160 of the embodiment has an appropriate length to allow the bottom cover 120 to slide relatively to the main body 110. When the bottom cover 120 slides along the moving path L to allow the key membrane 140 to be exposed outside the main body 110, the distance between the circuit board 130 sliding relatively to the main body 110 along with the bottom cover 120 and the connecting portion 116 becomes larger. The ribbon cable 160 of the embodiment has a sufficient length to be continuously connected between the circuit board 130 and the connecting portion 116. When the bottom cover 120 returns to its initial position to cover the holding space 114, the ribbon cable 160 can be contained in the holding space 114.

The ribbon cable 160 of the embodiment has good flexibility. As a result, when the bottom cover 120 covers the holding space 114 provided with an electronic element such as a battery 150, the ribbon cable 160 still can be effectively contained in part of the holding space 114 between the battery and the bottom cover 120. To hold the electronic element in the holding space 114, a holding structure (not shown) may be disposed on the main body 110 in the embodiment. When the bottom cover 120 slides along the moving path L to allow the holding space 114 to be exposed, the electronic element can be not only firmly held in the holding space 114 by the holding structure but can also be not easily detached from the main body 110.

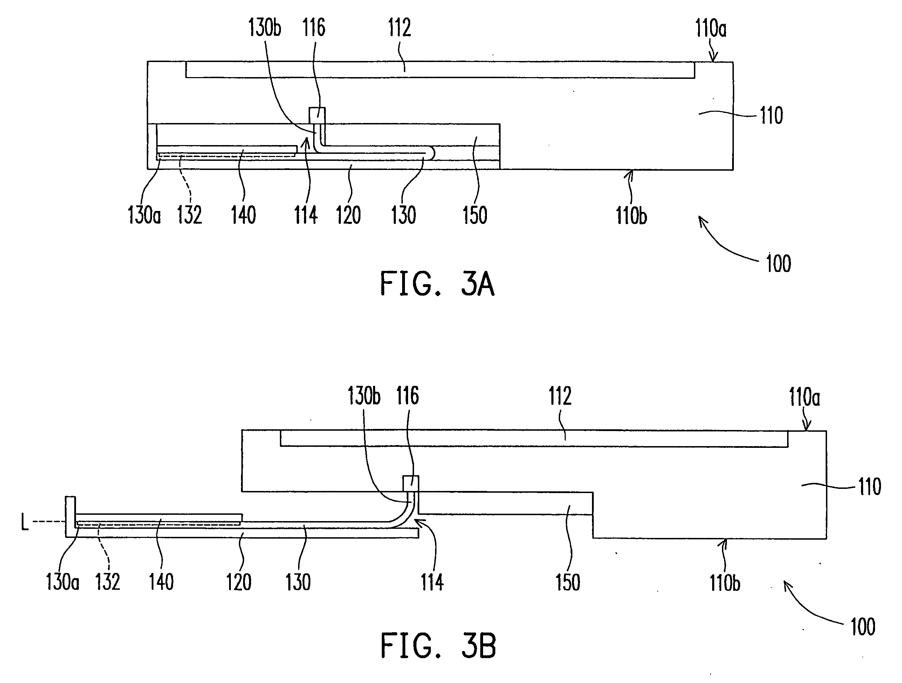

In another embodiment, the circuit board 130 may also be a flexible circuit board (as shown in FIG. 3A and FIG. 3B, FIG. 3A is a cross-sectional view showing a handheld electronic device according to another embodiment of the invention, and FIG. 3B is cross-sectional view showing that the bottom cover in FIG. 3A slides along a moving path). Since the flexible circuit board itself has good flexibility, it can be effectively connected to the main body 110 and is not easy to be interfered. In detail, the flexible circuit board has a first end 130a and a second end 130b. The first end 130a is provided on one surface of the bottom cover 120, and the surface faces the main body 110. The second end 130b is electrically connected to the connecting portion 116 of the main body 110.

Similar to the ribbon cable 160 of the first embodiment, when the bottom cover 120 slides along the moving path L to allow the key membrane 140 to be exposed outside the main body 110, the flexible circuit board also has sufficient length to be continuously connected between the circuit board 130 and the connecting portion 116. When the bottom cover 120 returns to its initial position to cover the holding space 114, part of the flexible circuit board between the first end 130a and the second end 130b can be contained in the holding space 114. Certainly, when the bottom cover 120 covers the holding space 114, and the holding space 114 is provided with an electronic element, the part of the flexible circuit board between the first end 130a and the second end 130b can also be effectively contained in part of the holding space 114 between the battery 150 and the bottom cover 120.

To sum up, in the invention as described with reference to the drawings, a circuit board electrically connected to the main body is provided on the bottom cover of the handheld electronic device, and the circuit board is provided with a key membrane. The circuit board is disposed at one surface of the bottom cover, and the surface faces the main body. The key membrane is provided on the circuit board. When the handheld electronic device is not used (that is, the bottom cover covers the holding space), the key membrane is contained in the main body. Therefore, the key membrane is provided without additionally occupying installation space which does not belong to the main body, the main body has a small whole thickness, and the handheld electronic device of the invention is light and slim.

The bottom cover may be a thin case of the handheld electronic device, the key membrane has a small thickness, and the circuit board may be a thin circuit board. Therefore, the design of providing the circuit board and the key membrane at the bottom cover can effectively decrease the whole thickness of the handheld electronic device further to allow the handheld electronic device to accord with the lightness and slimness tendency of products.

Although the present invention has been described in considerable detail with reference to certain preferred embodiments thereof, the disclosure is not for limiting the scope of the invention. Persons having ordinary skill in the art may make various modifications and changes without departing from the scope of the invention. Therefore, the scope of the appended claims should not be limited to the description of the preferred embodiments described above.

## Claims

1. A handheld electronic device, comprising:
a main body having a first side and a second side opposite to the first side, wherein the first side has a display screen, and the second side has a holding space;
a bottom cover slidingly provided at the main body and suitable to cover the holding space;
a key membrane provided at a surface of the bottom cover, wherein the surface faces the main body; and
a circuit board electrically connected to the key membrane and the main body;
wherein the bottom cover is suitable to slide along a path of movement to allow the key membrane to be exposed outside the main body.

2. A handheld electronic device according to claim 1, wherein the circuit board is a flexible circuit board.

3. A handheld electronic device according to claim 2, wherein the flexible circuit board has a first end and a second end, the first end is provided at the surface of the bottom cover, the surface faces the main body, the second end is electrically connected to the main body, and part of the flexible circuit board between the first end and the second end is located at the holding space.

4. A handheld electronic device according to claim 1, further comprising a ribbon cable provided at the holding space and electrically connected between the circuit board and the main body.

5. A handheld electronic device according to claim 1, wherein the main body further has a connecting portion, and the circuit board is electrically connected to the connecting portion.

6. A handheld electronic device according to claim 1, wherein the circuit board has a touch-sensitive area, and the key membrane is provided on the touch-sensitive area.

7. A handheld electronic device according to any preceding claim, wherein the bottom cover is a battery cover, and the holding space is suitable to hold a battery.

8. A handheld electronic device according to any preceding claim, wherein the key membrane is a metal key membrane.
